## Europäisches Patentamt

## European Patent Office

## Office européen des brevets

(19)

(11) Veröffentlichungsnummer: **0 249 847**
**A2**

(12) **EUROPÄISCHE PATENTANMELDUNG**

(21) Anmeldenummer: 87108271.5

(51) Int. Cl.⁴: **B29C 47/08**

(22) Anmeldetag: 09.06.87

| | |
|---|---|
| Die Bezeichnung der Erfindung wurde geändert (Richtlinien für die Prüfung im EPA, A-III, 7.3). | (71) Anmelder: SAAR-HARTMETALL UND WERKZEUGE GMBH<br>Bismarckstrasse 57-59<br>D-6620 Völklingen(DE) |
| (30) Priorität: 16.06.86 DE 3620267 | (72) Erfinder: Dittrich, Gerd<br>Fasanenweg 41<br>D-6620 Völklingen(DE) |
| (43) Veröffentlichungstag der Anmeldung:<br>23.12.87 Patentblatt 87/52 | |
| (84) Benannte Vertragsstaaten:<br>AT BE CH DE ES FR GB GR IT LI LU NL SE | (74) Vertreter: Vièl, Georg, Dipl.-Ing.<br>Am Zimmerplatz 16<br>D-6606 Saarbrücken-Gersweiler(DE) |

(54) **Kupplungs-Vorrichtung des Antriebs und der Schnecke einer Extrudiermaschine.**

(57) Die Patentanmeldung befaßt sich mit einer Vorrichtung zum Extrudieren von Kunststoffen, wobei in einem Plastifizier-Zylinder eine Schnecke angeordnet ist, die über eine Kupplung mit einem Antrieb verbunden ist.

Gemäß der Erfindung ist vorgesehen, daß die Schnecke und die Antriebswelle am Ende Abflachungen aufweisen und daß die Kupplung aus einem Unterteil und einer den Abflachungen zugeordneten, mit dem Unterteil verschraubbaren Pratze besteht.

Als wesentlicher Vorteil ergibt sich, daß eine Plastifizier-Schnecke störunanfällig über eine Kupplung angetrieben werden kann, selbst wenn die Schnecke aus bruchempfindlicherem Material wie z.B. Hartmetall besteht.

FIG.3

EP 0 249 847 A2

## Vorrichtung zum Extrudieren von Kunststoffen

Die Erfindung betrifft eine Vorrichtung zum Extrudieren von Kunststoffen, wobei in einem Plastifizier-Zylinder eine Schnecke angeordnet ist, die über eine Kupplung mit einem Antrieb verbunden ist.

Bei der Verarbeitung von Kunststoffen ist es bekannt, beispielsweise Kunststoff-Pulver oder -Granulat mit Hilfe einer Schnecke unter Aufheizung zu plastifizieren. Die Schnecke befindet sich in einem Plastifizier-Zylinder und ist über eine Kupplung mit einem Antrieb verbunden. In vielen Fällen ist diese Kupplung so ausgeführt, daß die Schnecke und die Antriebswelle je einen Schlitz aufweisen, in die Schlitze ein Keil eingelegt und zwei Halbschalen um die geschlitzten Enden von Antriebswelle und Schnecke - bei eingelegtem Keil - befestigt werden. Diese Art der Kupplung ist sehr störanfällig : Der Keil geht oft zu Bruch oder das geschlitzte Ende der Schnecke bricht aus.

Der Erfindung liegt die Aufgabe zugrunde, bei einer Vorrichtung der eingangs genannten Art die Schnecke mit der Antriebswelle lösbar so zu verbinden, daß eine gute Übertragung der Kräfte von dem Antrieb auf die Schnecke möglich ist, ohne daß die Schnecke oder Teile der Kupplung beschädigt werden.

Diese Aufgabe wird erfindungsgemäß dadurch gelöst, daß die Schnecke und die Antriebswelle am Ende Abflachungen aufweisen und daß die Kupplung aus einem Unterteil und einer den Abflachungen zugeordneten, mit dem Unterteil verschraubbaren Pratze besteht.

Nach einer weiteren Ausbildung der Erfindung ist vorgesehen, daß die Abflachung an der Schnecke schräg gegen das Ende ansteigend ausgebildet ist.

Eine andere erfindungsgemäße Ausbildung der Erfindung besteht darin, daß das Unterteil auf der der Antriebswelle zugewandten Seite eine abnehmbare, eine Verdickung der Antriebswelle hintergreifende Halterung aufweist.

Die mit der Erfindung erzielten Vorteile bestehen insbesondere darin, daß eine Plastifizier-Schnecke störunanfällig über eine Kupplung angetrieben werden kann, selbst wenn die Schnecke aus bruchempfindlicherem Material wie z. B. Hartmetall besteht.

Ein Ausführungsbeispiel ist in den Zeichnungen dargestellt und wird im folgenden näher beschrieben.

Es zeigen

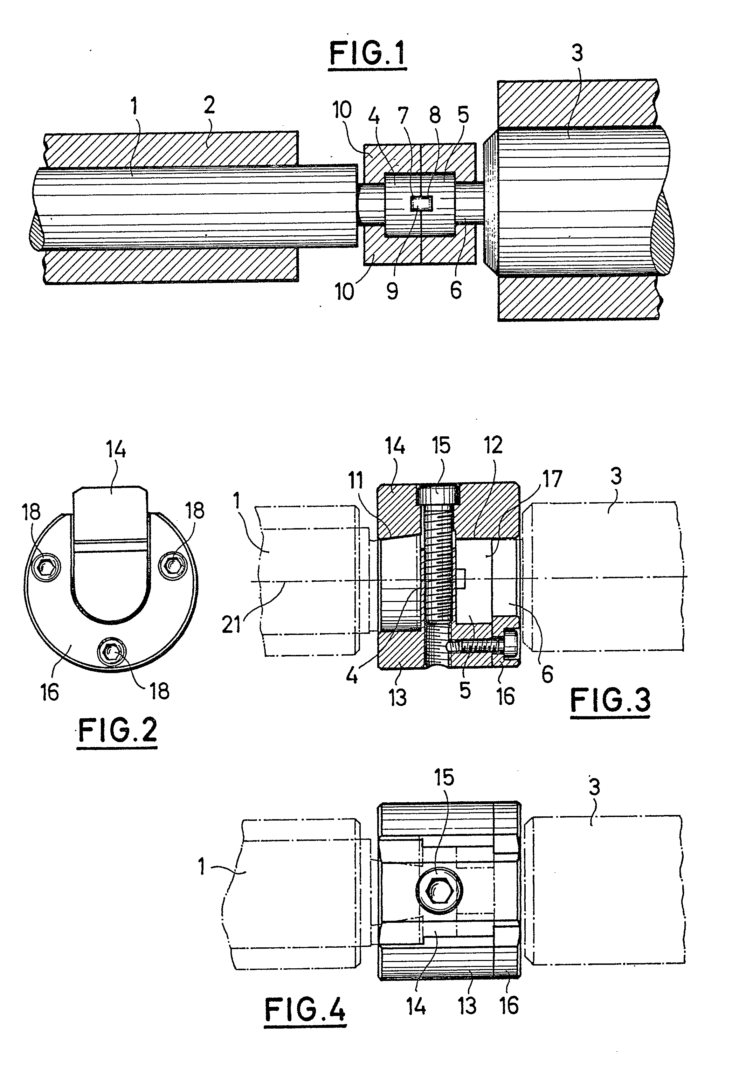

Fig. 1 schematisch eine bekannte Anordnung,

Fig. 2,

Fig. 3 und

Fig. 4 eine neue Vorrichtung in drei Ansichten,

Fig. 5,

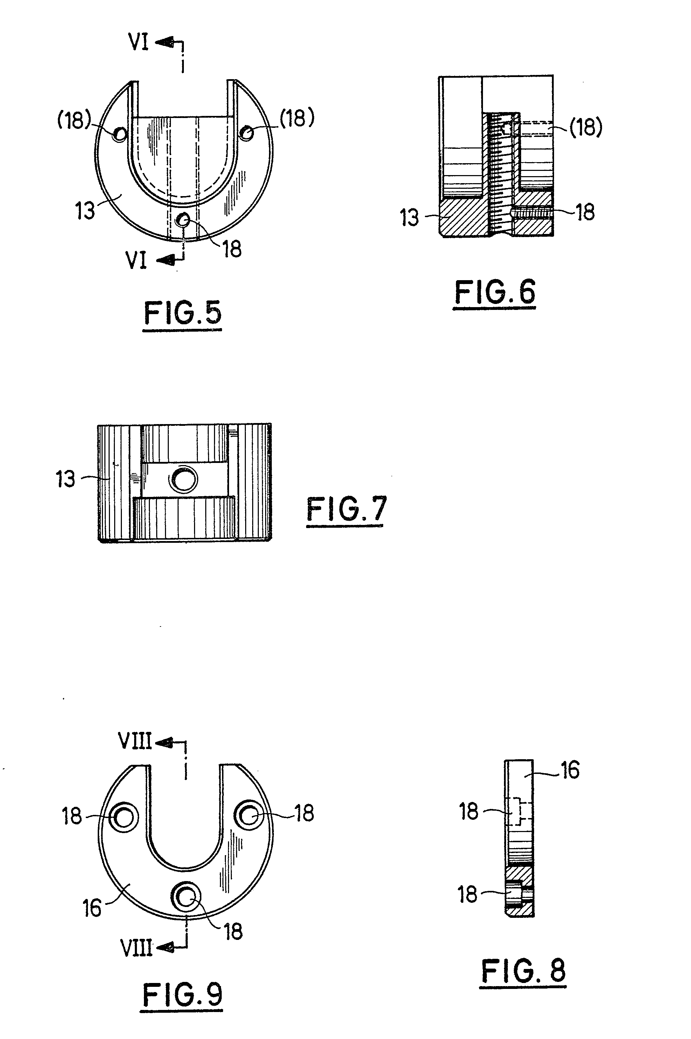

Fig. 6 und

Fig. 7 das Unterteil der Kupplung in drei Ansichten,

Fig. 8 und

Fig. 9 die Halterung zu dem Unterteil,

Fig. 10,

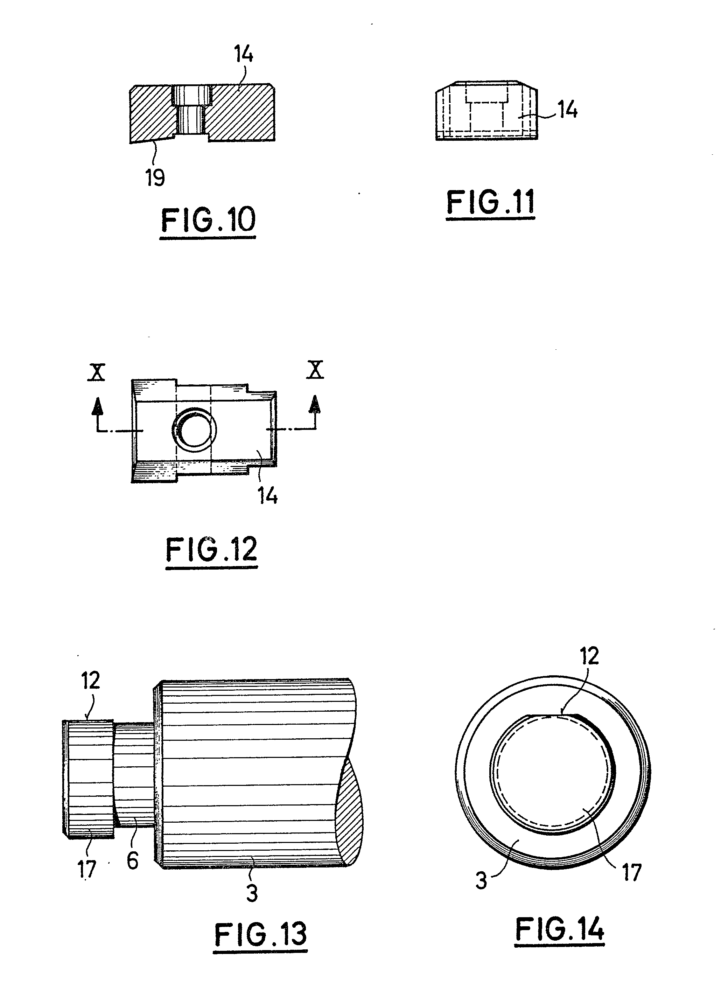

Fig. 11 und

Fig. 12 die Pratze in drei Ansichten,

Fig. 13 und

Fig. 14 die Antriebswelle mit Abflachung.

Fig 1 zeigt die prinzipielle Anordnung einer Plastifizier-Schnecke 1 in einem Plastifizier-Zylinder 2. Die Schnecke 1 ist mit einem Antrieb 3 verbunden, der je nach Ausführung des Extruders eine Drehbewegung oder eine solche Bewegung und gleichzeitig eine Längsverschiebung (Hub) der Schnecke 1 bewirkt. Die Enden 4 und 5 der Schnecke 1 und der Antriebswelle 6 sind verdickt und haben je einen Schlitz 7 bzw. 8, in die ein Keil 9 eingelegt wird. Diese Anordnung ist von zwei verschraubbaren Halbschalen 10 umgeben.

Insbesondere bei nicht genauem Sitz der Halbschalen 10 wird der Keil 9 oft zerstört, er bricht - schon bei nicht allzu großen auftretenden Belastungen. Unangenehmer ist, wenn in solchen Fällen ein Bruch der Schnecke 1 im geschlitzten Bereich des Endes 4 eintritt und die Schnecke 1 unbrauchbar wird und ausgewechselt werden muß.

Das in den Fig. 2, 3 und 4 in drei Ansichten dargestellte Ausführungsbeispiel hat diese Nachteile nicht. In diesem Fall haben die Enden 4 und 5 von Schnecke 1 und Antriebswelle 6 je eine Abflachung 11 und 12, die auch bei vorhandenen Aggregaten mit einer Antriebswelle 6 leicht anzubringen ist (vergl. auch Fig. 13 und 14). Die Schnecke 1 wird zweckmäßigerweise von vornherein am Ende 4 so ausgeführt, wie es dargestellt ist; eine Verdickung am Ende 4 ist insbesondere bei Schnecken 1 aus Hartmetall aus den verschiedensten Gründen unvorteilhaft. Die beiden Enden 4 und 5 von Schnecke 1 und Antriebswelle 6 werden von einem Unterteil 13 umfaßt, eine Pratze 14 wird aufgelegt und mit dem Unterteil mittels der Schraube 15 verschraubt. Die Pratze 14 ist so ausgebildet, daß sie bei Spannung durch die Schraube 15 einen guten Form-und Kraftschluß mit den Abflachungen 11 und 12 bewirkt.

Im dargestellten Beispiel ist die Abflachung 11 am Ende 4 der Schnecke 1 schräg gegen das Ende ansteigend ausgebildet. Diese Schräge ist dann erforderlich, wenn die Schnecke 1 mit einem Antrieb 3 gekoppelt wird, der sich dreht und gleichzeitig einen Hub in Richtung der Schneckenachse 21 ausführt.

Desweiteren kann es zweckmäßig sein, eine Halterung 16 vorzusehen, die auf der der Antriebswelle 3 zugewandten Seite des Unterteils 13 die Verdickung 17 der Antriebswelle 3 hintergreifend angebracht wird. Auf diese Weise ist eine leichte Umrüstung und Montage bei vorhandenen Antrieben auf die erfindungsgemäße Kupplung möglich.

In den Fig. 5, 6 und 7 ist das Unterteil 13 für sich in drei Ansichten dargestellt, um die Erfindung besser zu veranschaulichen. Herausgestellt sei dabei noch, daß die seitliche Halterung 16, die auch in den Fig. 8 und 9 gezeigt ist, durch Schrauben 18 mit dem Unterteil 13 verschraubt ist, die von dem Ende der Antriebswelle 6 her angeordnet sind.

Die Pratze 14 ist in den Fig. 10, 11 und 12 in drei Ansichten dargestellt. Im linken Teil ist deutlich die Schräge 19 zu erkennen, die der schräg ausgebildeten Abflachung 11 der Schnecke 1 zugeordnet ist.

Die Fig. 13 und 14 zeigen wie die Abflachung 12 an der Antriebswelle 6 angebracht sein kann : Die Abflachung 12 befindet sich etwas über der Antriebswelle 6.

## Ansprüche

1. Vorrichtung zum Extrudieren von Kunststoffen, wobei in einem Plastifizier-Zylinder eine Schnecke angeordnet ist, die über eine Kupplung mit einem Antrieb verbunden ist, dadurch **gekennzeichnet,** daß die Schnecke (1) und die Antriebswelle (6) am Ende (4, 5) Abflachungen (11, 12) aufweisen und daß die Kupplung aus einem Unterteil (13) und einer den Abflachungen (11, 12) zugeordneten, mit dem Unterteil (13) verschraubbaren Pratze (14) besteht.

2. Vorrichtung nach Anspruch 1, dadurch **gekennzeichnet,** daß die Abflachung (11) an der Schnecke (1) schräg gegen das Ende (4) ansteigend ausgebildet ist.

3. Vorrichtung nach Anspruch 1, dadurch **gekennzeichnet,** daß das Unterteil (13) auf der der Antriebswelle (6) zugewandten Seite eine abnehmbare, eine Verdickung (17) der Antriebswelle (6) hintergreifende Halterung (16) aufweist.

## FIG.1

## FIG.2

## FIG.3

## FIG.4

VI

(18)                    (18)

13

18

VI

**FIG.5**

13                    (18)

18

**FIG.6**

13

**FIG.7**

VIII

18                    18

16

18

VIII

**FIG.9**

16

18

18

**FIG. 8**

FIG.10

FIG.11

FIG.12

FIG.13

FIG.14